# EUROPEAN PATENT APPLICATION

(11) **EP 2 478 938 A1**
(43) Date of publication of application: **25.07.2012**
(21) Application number: 12150402.1
(22) Date of filing: 06.01.2012
(51) Int. Cl.: A63F 13/00

(54) **Information processing apparatus**

(30) Priority: 25.01.2011 JP 2011013406
(71) Applicant: Sony Computer Entertainment Inc., Tokyo 108-0075 (JP)
(72) Inventor: Tanaka, Shinichi, Minato-ku, Tokyo 108-0075 (JP); Enomoto, Shigeru, Minato-ku, Tokyo 108-0075 (JP)
(74) Representative: Turner, James Arthur

(57) **Abstract**

At least application programs and display files used to generate display images associated with the applications are recorded in a cartridge-type game recording medium. A storage (46) is a built-in type recording medium. When the game recording medium (70) is loaded in a drive, an installer processing unit (112) acquires the display files from the game recording medium (70) and installs the acquired display files in the storage (46). A board image generating unit (134,34) generates a board image using the display file installed.

## Description

The present invention relates to an information processing apparatus.

There have been propositions for a menu screen that arranges two-dimensionally a plurality of function icons and a plurality of medium icons with the aim to improve the operability of user interface.

### Related Art List

### (1) Pamphlet of International Patent Application No. WO 2005/109157.

Game files containing game programs are distributed and sold in the form of a recording medium such as an optical disk, magneto-optical disk, or Blu-ray disk. Also, with the development of the Internet in recent years, a communication environment has been created and well maintained in which game files and patch files are distributed from game servers to user terminals over the Internet. Against a background like this, game devices that can execute both the game files recorded in the recording media and the game files installed therein are being developed.

With the creation of such a communication environment, the game devices can now receive messages prepared by the other users or receive information on games from the game servers. For example, the users having the same game can exchange messages among themselves or the users can receive information on the games in their possession when they need it. All these facilities may work to boost the interest of the users in games.

Various respective aspects and features of the invention are defined in the appended claims. Combinations of features from the dependent claims may be combined with features of the independent claims as appropriate and not merely as explicitly set out in the claims.

Embodiments of the present invention relate to an information processing technique implemented by an information processing apparatus such as a game device.

A purpose of the present invention is therefore to provide a technology for efficiently presenting information concerning game applications to the users.

In order to resolve the aforementioned problems, an information processing apparatus according to one embodiment of the present invention includes: a receiving section for receiving a first recording medium that has included thereon an application program and a display file used to generate a display image concerning the application program; a built-in type second recording medium; a processor enabled to execute an install function; and an image generator for generating the display image using the display file, and the processor includes an installer processing unit configured to acquire the display file from the first recording medium and to install the acquired display file in the second recording medium. The image generator generates the display image using the display file installed in the second recording medium.

Optional combinations of the aforementioned constituting elements, and implementations of the invention in the form of methods, apparatuses, systems, recording media, computer programs, and so forth may also be practiced as additional modes of the present invention.

Embodiments will now be described by way of examples only, with reference to the accompanying drawings which are meant to be exemplary, not limiting, and wherein like elements are numbered alike in several Figures in which:
FIG. 1 shows an information processing system according to an embodiment of the present invention;
FIG. 2 shows an example of the appearance of an information processing apparatus according to an exemplary embodiment of the present invention;
FIG. 3 shows functional blocks of an information processing apparatus;
FIG. 4 shows functional blocks to execute an application;
FIG. 5 shows an example of a menu image displayed on a display device;
FIG. 6 shows an example of a board image; and
FIG. 7 shows an example of a board image displayed on a display device.

The invention will now be described by reference to the preferred embodiments. This does not intend to limit the scope of the present invention, but to exemplify the invention.

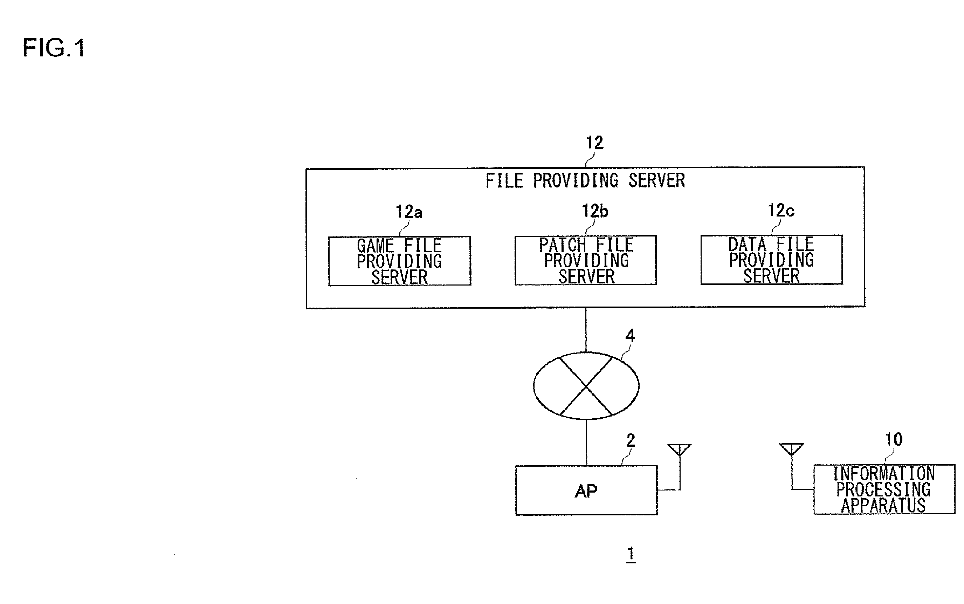

FIG. 1 shows an information processing system 1 according to an exemplary embodiment of the present invention. The information processing system 1 includes an information processing apparatus 10, which is a user terminal, and a file providing server 12. The file providing server 12 includes a game file providing server 12a, which provides game files including game programs, a patch file providing server 12b, which provides patch files to be applied to the games, and a data file providing server 12c, which provides data files to be used in the games.

The information processing apparatus 10, the game file providing server 12a, the patch file providing server 12b, and the data file providing server 12c are connected in a manner that permits communication via a network 4 such as the Internet or wired LAN. The information processing apparatus 10, which is equipped with a wireless communication function, downloads a desired file from the file providing server 12 by connecting to the network 4 via an access point (hereinafter referred to as "AP") 2. The AP 2 functions as a relay unit that connects the information processing apparatus 10 to another access point by wireless LAN (Local Area Network) or connects the information processing apparatus 10 to the network 4. Thus the information processing apparatus 10 may have a communication function by wireless LAN, but the information processing apparatus 10 may also download files from the file providing server 12 by connecting to a mobile telephone network using a mobile telephone communication scheme such as the third-generation mobile communication system.

The game file providing server 12a, the patch file providing server 12b, and the data file providing server 12c may be constituted by a single server, but may also be constituted by a plurality of servers. Also, two or more combinations of the game file providing server 12a, the patch file providing server 12b, and the data file providing server 12c may be constituted by a single server.

The game file providing server 12a provides game files. A game file includes a boot file, a group of files for executing a game such as a game program, and a group of files to be used by the system software of the information processing apparatus 10. The game program is a program necessary for the execution of a game, and the game progresses as the game program is run. The boot file is a program for starting the game program, and the game program is called out and executed as the boot file is executed. The group of files to be used by the system software includes, for instance, game icon image data to be displayed on a menu image of the information processing apparatus 10.

The patch file providing server 12b provides a patch file to be applied to a game. The patch file includes a game program with the bugs fixed, a data file for changing game functions, and the like. The patch file has the same file composition as that of the game file and includes contents to be replaced with contents included in the game file. As used herein, the term "contents" or "content" refers collectively to programs, data files, and the like contained in the game file or the patch file.

The data file providing server 12c provides data files constituting new characters or game scenes that are to be added to the execution of an original game. The data files held by the data file providing server 12c are used in an additional manner along the progress of the original game.

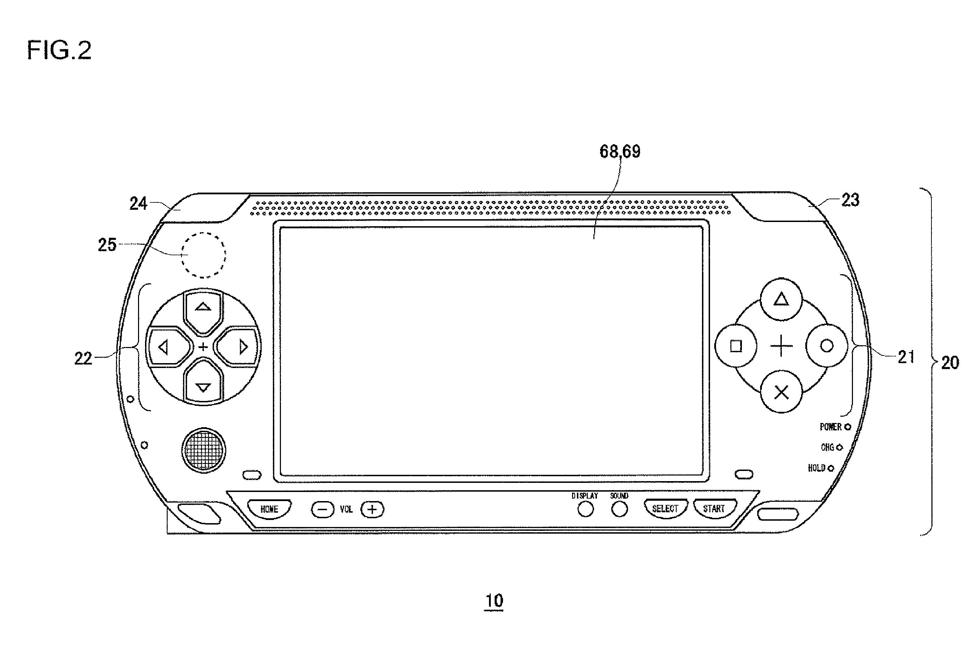

FIG. 2 shows an example of the appearance of an information processing apparatus 10 according to an exemplary embodiment of the present invention. The information processing apparatus 10 shown in FIG. 2 is a mobile terminal equipped with a wireless communication function. Also, it should be appreciated that the information processing apparatus 10 may be connected to the network 4 via cable and it may be a stationary terminal, instead of a mobile terminal.

As shown in FIG. 2, input devices 20, such as instruction input buttons 21, direction keys 22, an R button 23, and an L button 24, and a display device 68 are provided on the front side of the information processing apparatus 10, which is the side thereof facing the user who holds and operates it. The display device 68 is provided with a touch panel 69 that detects contact by a finger of the user or a stylus pen or the like. Provided inside the information processing apparatus 10 is a motion sensor 25 capable of detecting the inclination of the information processing apparatus 10. It should be noted also that the information processing apparatus 10 may be provided with a back touch panel on the back side thereof.

Provided in a lateral side of the information processing apparatus 10 is a receiving section, such as a slot (not shown), for receiving a recording medium like a memory card. Also provided in a lateral side of the information processing apparatus 10 is a receiving section, such as a slot (not shown), for receiving a recording medium which has a game file recorded thereon.

The user, while holding the information processing apparatus 10 with both hands, can operate the instruction input buttons 21 with the thumb of the right hand, the direction keys 22 with the thumb of the left hand, the R button 23 with the index finger or the middle finger of the right hand, and the L button 24 with the index finger or the middle finger of the left hand, for instance. Also, when operating the touch panel 69, the user may hold the information processing apparatus 10 with both hands and operate the touch panel 69 with the thumbs of both hands, or may hold the information processing apparatus 10 with the left hand and operate the touch panel 69 with the right hand, the direction keys 22 with the thumb of the left hand, and the L button 24 with the index finger or the middle finger of the left hand.

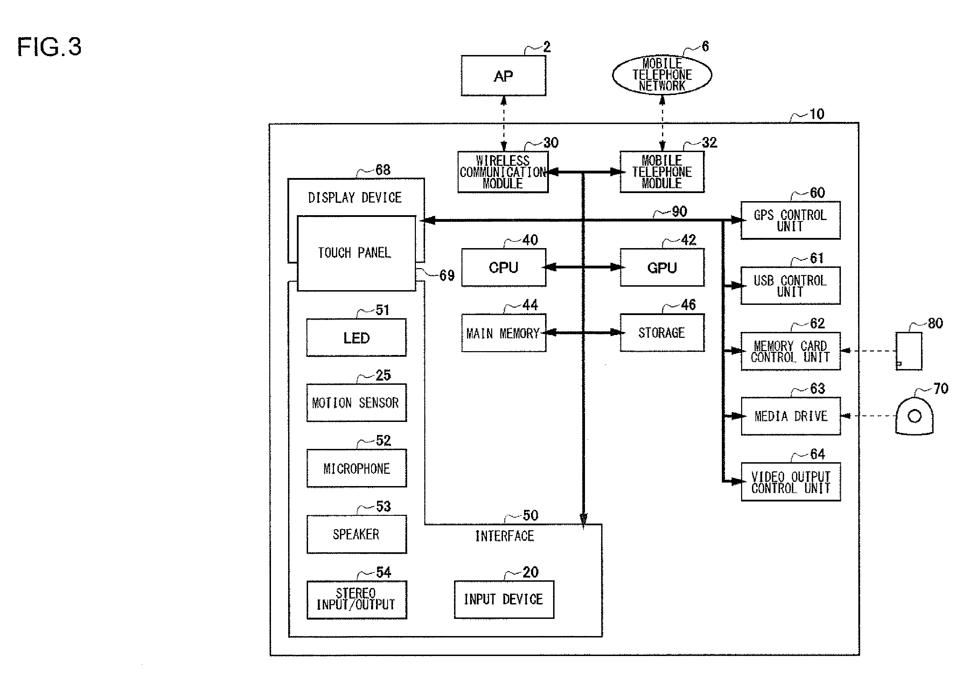

FIG. 3 shows functional blocks of the information processing apparatus 10. The display device 68 display images generated by the respective functions of the information processing apparatus 10. The display device 68 may be a liquid crystal display device or an organic EL display device. The touch panel 69 is so provided as to be superimposed on the display device 68, and detects the touch or contact of a user' s finger, pen or the like. The touch panel may implement any of a resistive overlay method, a surface electrostatic capacitive method, a projected electrostatic capacitive method, and the like. In the information processing apparatus 10, the display is comprised of the display device 68 and the touch panel 69.

A wireless communication module 30 is constituted by a wireless LAN module compliant with a communication standard such as IEEE 802.11b/g, and connects to the network 4 via the AP 2. The wireless communication module 30 may communicate directly with the other information processing apparatus 10 in ad-hoc mode. Amobile telephone module 32 is compatible with a third generation digital mobile telephone scheme compliant with the international mobile telecommunication 2000 (IMT-2000) standard prescribed by the International Telecommunication Union (ITU), and the mobile telephone module 32 connects to a mobile telephone network 6. A subscriber identity module (SIM) card, in which a unique ID number to identify a telephone number of a mobile telephone has been recorded, is inserted to the mobile telephone module 32.

In an interface 50, an LED (light emitting diode) 51 blinks while the wireless communication module 30, the mobile telephone module 32, and the like transmit and receive data. A motion sensor 25 detects the movement of the information processing apparatus 10. A microphone 52 inputs sound surrounding the information processing apparatus 10. A speaker 53 outputs audio generated by the respective functions of the information processing apparatus 10. A stereo input/output terminal 54 receives the input of stereo audio from an external microphone, and outputs the stereo audio to an external headphone or the like. An input device 20 includes the aforementioned operation keys and the like and receives the input of a user' s operation.

A CPU (central processing unit) 40 executes programs and the like loaded in main memory 44. A GPU (graphics processing unit) 42 performs computations necessary for the image processing. The main memory 44 is comprised of RAM (random access memory) and the like, and stores programs, data, and so forth that run and operate in the information processing apparatus 10. A storage 46 is comprised of NAND-type flash memory and the like, and stores programs, data, and so forth. The storage 46 is used as a built-in type auxiliary storage for a recording medium 80 (described later).

A GPS (global positioning system) control unit 60 receives signals from GPS satellites and computes the present position. A USB control unit 61 controls communications between peripheral devices connected via USBs (universal serial buses). A video output control unit 64 outputs video signals to an external display device, based on a standard such as HDMI (high definition multimedia interface). A memory card control unit 62 controls read and write of data between the recording media 80 such as flash memories and the like loaded within the receiving section (not shown). As the removable recording medium 80 is loaded within the receiving section, the recording medium 80 is used as an external auxiliary storage. A media drive 63 is a receiving section in which a game recording medium 70 that has recorded game files is loaded, and the media drive 63 controls read and write of data between the game recording media 70. Note that the game file recorded in the game recording medium 70 has the same file composition as that of the game file transmitted from the game file providing server 12a. The media drive 63 drives the game recording medium 70, so that the user can play games recorded in the game recording medium 70. The above-described respective functional blocks are connected with each other by a bus 90.

The information processing apparatus 10 according to the present embodiment can install game files into the recording medium 80 by downloading the game files from the game file providing server 12a. In this manner, the information processing apparatus 10 has a function of executing the game files recorded in the game recording medium 70 and those installed into the recording medium 80.

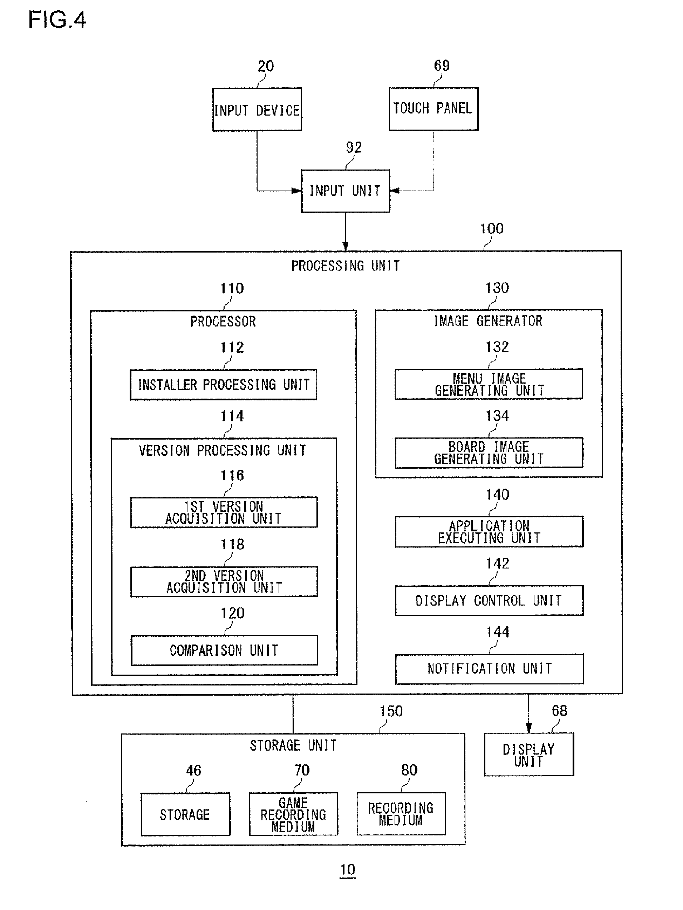

FIG. 4 shows functional blocks to execute an application. The information processing apparatus 10 includes an input device 20, a touch panel 69, an input unit 92, a processing unit 100, and a storage unit 150. The input unit 92 receives operation instructions which are inputted by the user through the input device 20 and the touch panel 69, and the input unit 92 supplies the received instructions to the processing unit 100. The storage unit 150 includes a storage 46, a game recording media 70 and/or a recording medium 80. The functions of these recording media will be described hereunder.

The game recording medium 70 is a cartridge-type recording medium where game files are recorded in a read-only area, and the game recording media 70 are sold and distributed through game shops or virtual game shops on the Internet. The user, who has purchased a game recording medium 70, can enjoy playing the game by loading the game recording medium 70 in the media drive 63.

A writable storage area is provided and reserved in the game recording medium 70, and a program, such as a patch file, and/or data necessary for the game can be written to the writable area. Thus, the game recordingmedium 70 is comprised of the writable/readable area and the read-only area where the game files are recorded.

The storage 46 and the recording medium 80 are storage media used as auxiliary storages in the information processing apparatus 10. The storage 46 is a built-in type recording medium which is not freely detachable. On the other hand, the recording medium 80 is a removable recording medium and has a larger recording capacity than the storage 46. Accordingly, the information processing apparatus 10 performs control such that when a game file is downloaded from the game file providing server 12a, the downloaded game file is basically installed into the recording medium 80

On the other hand, the built-in storage 46, which has a smaller recording capacity, is controlled such that programs and data, such as system software, necessary for the operations of the information processing apparatus 10 are recorded therein and the game files and the like are not recorded therein under a policy requiring that the available recording capacity should not be used and reduced more than necessary. If the recording medium 80 has already been removed, the downloaded game file will be installed into the storage 46. In this case, the game file recorded in the storage 46 may be transferred to the recording medium 80 when the recording medium 80 is installed back, so that control can be performed to ensure the free space of the storage 46.

The processing unit 100 executes the respective functions as a processor 110, an image generator 130, an application executing unit 140, a display control unit 142, and a notification unit 144. Those functions of the processing unit 100 are realized, in terms of hardware components, by the CPU 40, the GPU 42, and the main memory 44, and softwarewise by programs loaded in the main memory 44 and the like. Depicted herein are functional blocks implemented by cooperation of hardware and software. Therefore, it will be obvious to those skilled in the art that the functional blocks may be implemented by a variety of manners including hardware only, software only or a combination of both.

The processor 110, which has an install function, includes an installer processing unit 112 and a version processing unit 114. The image generator 130, which has a function of generating display images, includes a menu image generating unit 132 and a board image generating unit 134. The application executing unit 140 has a function of executing an application. More specifically, this application executing function is achieved as follows. That is, a game boot file is executed by the system software and then the game program is executed by the boot file. The display control unit 142 has a function of displaying images on the display device 68, whereas the notification unit 144 has a function of conveying a predetermined message to the user.

A description is hereinbelow given of a procedure for staring a game in the information processing apparatus 10 according to the exemplary embodiment. At power-on of the information processing apparatus 10 or when the user instructs the displaying of the menu, an menu image is displayed on the display device 68. Icons for executable applications are arranged and displayed on the menu image.

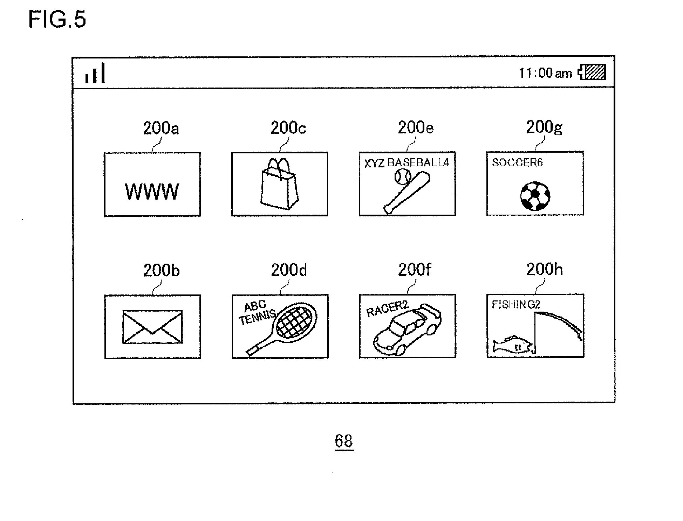

FIG. 5 shows an example of a menu image displayed on the display device 68. The menu image generating unit 132 generates a menu image where icon images 200a to 200h of executable applications are arranged. The thus generated menu image is displayed on the display device 68 by the display control unit 142. Each icon image 200 is associated with each application. When the user selects an icon, which he/she wishes to execute, on the menu image, the environment in which the application identified by the selected icon image 200 is executed is created and now ready for use.

Each icon image 200 is prepared for each application and is preferably prepared by the use of text or picture with which the user can recognize the application at first glance. Thereby, as the user looks at the menu image, he/she can instantly grasp the application identified by the icon image 200 and therefore the application that the user wishes to execute can be easily selected. For example, the icon image 200a identifies an application for Web connection, the icon image 200b an application for electronic mail, and the icon image 200c an application for connecting to a virtual shopping mall. Also, the icon images 200d to 200h identify game titles. Note that these applications are only exemplary and other applications may be included.

The information processing apparatus 10 can execute both a game program recorded in the game recording medium 70 and a game program installed in the recording medium 80. In the menu image of FIG. 5, the icon image 200d identifies a game (i.e., ABC TENNIS) of the game recording medium 70 loaded in the media drive 63, and the icon images 200e to 200h indentify games installed in the recording medium 80. If the recording medium 70 is not loaded in the media drive 63, the arrangement may be such that the icon image 200d of "ABC TENNIS" is not displayed in the menu image and only the icon images 200e to 200h of games installed in the recording medium 80 are displayed. A description is hereinbelow given of an example where the icon image 200d can be displayed by installing beforehand the icon image 200d in the storage 46 even when the game recording medium 70 is not loaded in the media drive 63.

The user selects the icon image 200 on the menu image when he/she taps a region where any of icon images is displayed. The tap position is detected by the touch panel 69, and the input unit 92 receives the detected tap position as the selection operation of the icon image 200. Note that the input unit 92 may receive the selection operation of the icon image 200 identified by a cursor when the user moves the cursor on the menu image by operating the input device 20 and performs a predetermined decision operation.

When the icon image 200 of a game (any of the icon images 200d to 200h in the example of FIG. 5) is selected on the menu image, the game identified by the icon image 200 does not start immediately in the information processing apparatus 10. Instead, a display image concerning the game identified by the icon image 200 is first generated and displayed on the display device 68. Hereinafter, this display image will be referred to as "board image". Since the board image is presented to the user before the start of the game, the board image at least plays the role of having the user instruct the start of the game. Accordingly, the board image is constituted by including at least a game start button with which to instruct the start of a game by the user. A display file, such as resource file used for the generation of board images, is included in the game file.

The board images are prepared by a game supplier. The board image needs to include at least the game start button. Otherwise, the board image may be freely created by the game supplier, and thus the board image may be configured such that the message concerning additional characters of a game, the message concerning the date of release of new game and so forth are displayed within the board image. Also, an environment allowing the users who have the same game to exchange messages with each other may be provided. In such a case, the board image is constituted by including a region to show messages for plural users.

In this manner, the game suppliers can efficiently supply various kinds of information to the user by creating the board image according to a game. Thus, the game suppliers modify or devise the board image to attract the user's interest, so that the board image can be used as a tool that promotes the popularity of the game. At the same time, the user can enjoy the service provided through the board image, and can also find pleasure in other than the game itself. In this manner, the information processing apparatus 10 according to the present exemplary embodiment presents the board image to the user before the start of the game, so that various ways of having fun can be offered to the user.

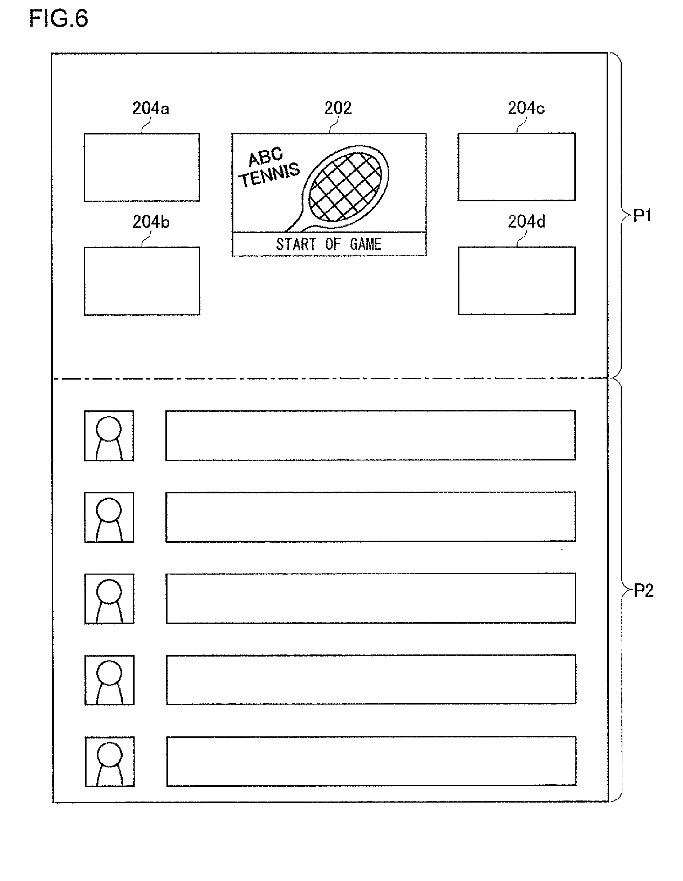

FIG. 6 shows an example of the board image. The board image generating unit 134 generates a board image associated with the icon image 200 selected in the menu image. The icon image 200d of a game (ABC TENNIS) recorded in the game recording medium 70 is selected in the example shown in FIG. 6, and the board image generating unit 134 generates an image associated with "ABC TENNIS".

The board image is constituted by including two partial regions P1 and P2 which are a program information region P1 and a communication region P2. The program information region P1 is a region where information prepared by the game supplier of a game is presented, whereas the communication region P2 is a region where information is exchanged among the users and so forth.

The program information region P1 is a region where program-related images are arranged as display elements. The board image generating unit 134 references display files, such as a file used to identify the layout of the program information region P1 and a resource file defining the program-related images to be displayed, so as to generate the program information region P1 of the board image. In the example shown in FIG. 6, a start button 202 to be operated for starting the selected game is arranged in the center of the program information region P1, and various pieces of related information 204a to 204d related to the selected game are arranged around the start button 202. The related information 204 may be a link to the official website of a game and messages delivered from the supplier of the game (ABC TENNIS). The information processing apparatus 10 may acquire the latest related information 204 from the file providing server 12 or may acquire it when displaying the board image. In so doing, the user can easily obtain useful messages about the game to be executed. For example, when the user comes to know the fact that a patch file of the game can be downloaded, he/she can promptly downloads the patch file from the patch file providing server 12b.

The communication region P2 is a region where the contents of messages posted by plural users about the game are presented. The board image generating unit 134 references display files, such as a file used to identify the layout of the communication region P2 and a resource file defining the objects to be displayed, so as to generate the communication region P2 of the board image. For example, the user of the information processing apparatus 10 submits a message concerning the game to a predetermined communication server via the network 4. In order to achieve such a posting process, the information processing apparatus 10 stores, in advance, information (e.g., URL) used to identify the communication server to which the message is to be submitted, in the storage 46 and references this information so as to transmit the message entered by the user to the communication server. Also, when generating a board image associated with the game, the board image generating unit 134 accesses the communication server and acquires the message information on this game posted in the past. Then the board image generating unit 134 generates the image of the communication region P2 where the display elements indicating the acquired message contents and the sender of the message are arranged, as part of the board image. Thereby, the user can exchange information on the game with other users, so that the number of gaming companions can be increased.

As described above, the board image is presented to the user before the start of the game, so that the scheme which is advantageous to both the user and the game supplier can be constructed.

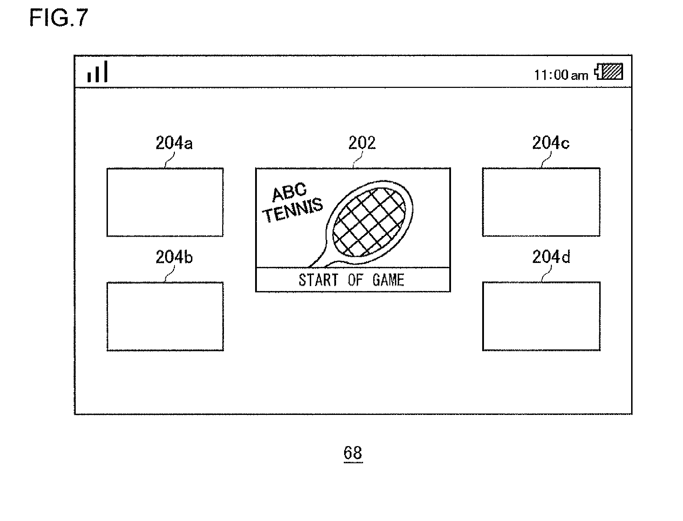

FIG. 7 shows an example of the board image displayed on the display device 68. Though the board image generating unit 134 generates the program information region P1 and the communication region P2 according to the display files such as the layout file and the resource file, the layout file determines the size of the program information region P1 so that the size of the program information region P1 is equal to that of the whole front surface of the display device 68. It is to be noted that the layout file may be incorporated into the resource file. In such a case, the resource file defines the layout of each display element. As the user scrolls the board image, displayed on the display device 6 8, down on the screen, the communication region P2 as shown in FIG. 6 is displayed.

In the board image as shown in FIG. 7, the application executing unit 140 starts a game at a tap on the start button 202 by the user. More specifically, the system software executes the boot file of the game file, and the boot file executes the game program of the file. In the information processing apparatus 10, therefore, a board image of a corresponding game is displayed as the user selects the icon image 200 of the game from the menu image, and then the game is started as the user selects the start button 202 from the board image.

Thus, while the board image is shown to the user before the start of the game, the related information 204 in the program information region P1 and the communication region P2 of the board image can be used independently of the game as an information transmission tool or a communication tool. If the icon image 200d is selected with the game recording medium 70 loaded in the media drive 63, then the board image of "ABC TENNIS" will be displayed. However, there may be cases where the game recording medium 70 is removed from the media drive 63 when the user is exchanging messages with the other user. In such cases, since the communication region P2 of the board image has essentially no direct relation to the execution of the game (ABC TENNIS), it is desirable that the user can continue using the communication region P2 even when the game recording medium 70 has been removed from the media drive 63. Therefore, the processor 110 of the processing unit 100 has a display file for generating the board image recorded in the game recording medium 70 installed into the built-in type storage 46.

More specifically, as the game recording medium 70 is loaded in the media drive 63, the installer processing unit 112 in the processor 110 acquires the display file for generating the board image from the game recording medium 70 and installs the acquired display file into the storage 46. The display file for generating the board image contains a resource file, a layout file, and the like for generating the program information region P1 and the communication region P2. Hereinafter, the file for generating the board image is referred to as a board display file. It is to be noted that the installer processing unit 112 at this time also acquires the icon image data for displaying a menu image from the game recording medium 70 and installs the acquired icon image data in the storage 46.

The install function of the processor 110 is implemented by the system software of the information processing apparatus 10.

The system software, upon detecting the loading of the game recording medium 70 in the media drive 63, automatically runs the install function of the processor 110. It should be noted that this install function may be implemented by the system software itself or also by the utility software.

Thus, as the installer processing unit 112 installs the icon image data and board display file from the game recording medium 70 in the storage 46, the image generator 130 generates the menu image and the board image, using the icon image data and board display file installed in the storage 46, respectively. More specifically, the menu image generating unit 132 puts the icon image 200d of "ABC TENNIS" on the menu image, using the icon image data installed in the storage 46, and the board image generating unit 134 generates the board image of "ABC TENNIS", using the board display file installed in the storage 46. Therefore, the menu image generating unit 132 and the board image generating unit 134, which do not use the icon image data and board display file recorded in the game recording medium 70, can continue displaying the menu image and the board image even when the game recording medium 70 is removed from the media drive 63 during the display of the menu image or the board image. Moreover, even when the game recording medium 70 is not loaded in the media drive 63 in the first place, the menu image generating unit 132 and the board image generating unit 134 can display the menu image or the board image. Note that when the game recording medium 70 is not loaded in the media drive 63, the arrangement may be such that the menu image generating unit 132 displays a message indicating the absence of the game recording medium 70 in the media drive 63 near the icon image 200d on the menu image.

It is to be noted that the application executing unit 140 cannot start a game in the case where the user operates the start button 202 instructing the start of the game on the board image while the game recording medium 70 is not loaded in the media drive 63. In such a case, the notification unit 144 conveys a message indicating the need for loading the game recording medium 70 in the media drive 63 to the user. This notification may be displayed on the display device 68 or may be audio-outputted from the speaker 53. It should be noted that the notification unit 144 may convey only a message indicating the absence of the game recording medium 70 in the media drive 63 to the user. That is, the arrangement is acceptable if the user is notified of the fact that the game cannot be started without the game recording medium 70 loaded in the media drive 63.

There are instances where the icon image data and board display file installed in the storage 46 are updated by a patch file downloaded from the patch file providing server 12b. There are also instances where the icon image data and board display file recorded in the game recording medium 70 are updated by a patch file. In the game recording medium 70, the game file is recorded in the read-only area and as such does not allow overwriting. Therefore, the patch file is, in fact, recorded in the writable area. In the present exemplary embodiment, in generating display images by the image generator 130, the images related to the game in the game recording medium 70 comprise the icon image data and board display file installed in the storage 46, so that it is desirable that there are the newest versions thereof installed in the storage 46.

Accordingly, the version processing unit 114 checks on the version of the icon image data and board display file recorded in the storage 46 and the version of the icon image data and board display file recorded in the game recording medium 70. In the exemplary present embodiment, version information is attached to the game file and the patch file. The version information is acceptable so long as the version information can identify the order of generation of game files and patch files. The version information may be numerals from small to larger in a chronological order or may be any information that can identify the dates of generation.

In the version processing unit 114, the first version acquisition unit 116 acquires the first version information on the icon image data and board display file recorded in the game recording medium 70 before the installer processing unit 112 performs an install processing. Also, the second version acquisition unit 118 acquires the second version information on the icon image data and board display file recorded in the storage 46. The comparison unit 120 identifies the newest version by comparing the first version information with the second version information with each other.

In this process, if the first version information is newer, the installer processing unit 112 acquires the icon image data and board display file from the game recording medium 70 and installs them in the storage 46. In this manner, the newest icon image data and board display file are installed in the storage 46. If there is no difference between the first version information and the second version information, the installer processing unit 112 will not perform the install processing because there are already the newest icon image data and board display file installed in the storage 46.

Also, when comparison unit 120 determines that the second version information is newer, the arrangement may be such that the installer processing unit 112 acquires the icon image data and board display file from the storage 46 and installs them in the writable area of the game recording medium 70.

As described above, the installer processing unit 112 installs the icon image data and board display file recorded in the game recording medium 70 in the storage 46 prior to the start of the game. On the other hand, the installer processing unit 112 does not install the icon image data and board display file recorded in the recording medium 80 in the storage 46. Hence, as for the game recorded in the recording medium 80, the image generator 130 generates the menu image and the board image, using the icon image data and board display file recorded in the recording medium 80. Thus, it is preferable that the free area of the storage 46 is secured by using less of recording capacity of the storage 46.

The present invention has been described based upon illustrative exemplary embodiments. The above-described exemplary embodiments are intended to be illustrative only and it will be obvious to those skilled in the art that various modifications to the combination of constituting elements and processes could be developed and that such modifications are also within the scope of the present invention. In the exemplary embodiments, games are cited and implemented as an example of applications but applications other than games may be implemented instead.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. An information processing apparatus (10), comprising:
a receiving section for receiving a first recording medium that has included thereon an application program and a display file used to generate a display image concerning the application program;
a built-in type second recording medium;
a processor (110) enabled to execute an install function; and
an image generator (130) for generating the display image using the display file,
wherein the processor (110) includes an installer processing unit (112) configured to acquire the display file from the first recording medium and to install the acquired display file in the second recording medium, and
wherein the image generator (130) generates the display image using the display file installed in the second recording medium.

2. An information processing apparatus (10) according to claim 1, wherein, after the first recording medium is loaded within the receiving section, the processor (110) executes the install function.

3. An information processing apparatus (10) according to claim 1, wherein the image generator (130) generates a display image with which a user instructs a start of an application.

4. An information processing apparatus (10) according to claim 3, further comprising an executing unit configured to run the application program recorded in the first recording medium, when the user instructs the start of the application.

5. An information processing apparatus (10) according to claim 1, the image generator (130) including:
a first image generating unit configured to generate a menu image including an icon image with which to identify an application; and
a second image generating unit configured to generate a display image including a region in which a user starts the application, from the display file installed in the second recording medium, when the user selects the icon image within the menu image.

6. An information processing apparatus (10) according to claim 5, wherein the first recording medium has recorded thereon data regarding the icon image,
wherein the installer processing unit (112) acquires the data regarding the icon image from the first recording medium and installs the acquired data in the second recording medium, and
wherein the first image generating unit generates the menu image using the data regarding the icon image installed in the second recording medium.

7. An information processing apparatus (10) according to claim 5, wherein, after the first recording medium has been removed from the receiving section after the second image generating unit has generated the display image, the second image generating unit continues to display the display image.

8. An information processing apparatus (10) according to claim 7, further comprising a notification unit (144) configured to convey a message indicating a loading requirement for the first recording medium in the receiving section or a message indicating that the first recording medium has not loaded, when the user operates within the region instructing to start of the application while the first recording medium has not been loaded within the receiving section.

9. An information processing apparatus (10) according to claim 1, the processor (110) including:
a first version information acquisition unit (116) configured to acquire first version information on the display file recorded in the first recording medium;
a second version information acquisition unit (118) configured to acquire second version information on the display file recorded in the second recording medium; and
a comparison unit (120) configured to compare the first version information with the second version information.

10. An information processing apparatus (10) according to claim 9, wherein, when the first version information is newer than the second version information, the installer processing unit (112) acquires the display file from the first recording medium and installs the acquired display file into the second recording medium.

11. An information processing apparatus (10) according to claim 1, further comprising a second receiving section for receiving a third recording medium that has recorded thereon an application program and a display file,
wherein the processor (110) does not install the display file recorded in the third recording medium into the second recording medium.

12. A program embedded in a non-transitory computer-readable medium, the program comprising:
an acquisition module operative to acquire a display file from a first recording medium that has included thereon an application program and a display file used to generate a display image concerning the application program;
an install module operative to install the acquired display file into a built-in type second recording medium; and
a generation module operative to generate a display image using the display file installed in the second recording medium.

13. A non-transitory computer-readable medium encoded with a program, executable by a computer, according to claim 12.
